# FASCICULE DE BREVET EUROPEEN

(11) **EP 2 089 640 B1**
(45) Date de publication et mention de la délivrance du brevet: **05.01.2011**
(21) Numéro de dépôt: 07866547.8
(22) Date de dépôt: 30.11.2007
(51) Int. Cl.: F16H 3/12, F16H 61/04, F16H 63/50, B60W 30/18, B60W 10/10, B60W 10/08

(54) **PROCEDE DE CHANGEMENT DE RAPPORT A CRABOTAGE OPTIMISE DANS UNE BOITE DE VITESSES, ET BOITE DE VITESSES NOTAMMENT POUR VEHICULE HYBRIDE**
VERFAHREN ZUR OPTIMIERTEN ÄNDERUNG DES KLAUENKUPPLUNGSVERHÄLTNISSES IN EINEM GETRIEBE UND GETRIEBE FÜR EIN HYBRIDFAHRZEUG
METHOD FOR THE OPTIMISED CHANGE OF THE JAW CLUTCHING RATIO IN A GEAR BOX, AND GEAR BOX ESSENTIALLY FOR A HYBRID VEHICLE

(30) Priorité: 15.12.2006 FR 0655544
(43) Date de publication de la demande: 19.08.2009
(73) Titulaire: Peugeot Citroën Automobiles SA, 78140 Vélizy-Villacoublay (FR)
(72) Inventeur: GAULLY, Bruno, 91630 Marolles En Hurepoix (FR); SIEGFRIED, Adrien, 92250 La Garenne Colombes (FR)
(86) Numéro de dépôt international: PCT/FR2007/052426
(87) Numéro de publication internationale: WO 2008/074955

(56) Documents cités:
- EP-A2- 1 122 109
- FR-A1- 2 796 437
- US-B1- 6 319 168

## Description

La présente invention concerne un procédé de changement de rapport dans une boîte de vitesses. Elle concerne également une boîte de vitesses, notamment pour véhicule hybride. Plus généralement, elle s'applique à des véhicules équipés d'une traction électrique. US 6319 168 divulgue les caractéristiques du préambule de la revendication 1 ou 5.

Actuellement, les véhicules automobiles hybrides utilisent des machines électriques pour entraîner la boîte de vitesses et transmettre le couple moteur aux roues motrices des véhicules. Une boîte de vitesses permet d'obtenir plusieurs rapports de démultiplication entre le moteur électrique et la roue. La chaîne de traction comporte donc un mécanisme de changement de rapport qui permet soit d'obtenir un couple important au niveau des roues motrices, soit d'atteindre la vitesse maximale. Se pose alors le problème d'effectuer le changement de rapport d'une façon aussi imperceptible que possible. Plus particulièrement, se pose le problème de s'affranchir au maximum de l'inertie de la machine électrique au moment des changements de rapports, c'est-à-dire des changements de vitesses, dans le contexte d'un véhicule hybride.

Un but de l'invention est notamment de surmonter le problème précité. A cet effet, l'invention a pour objet un procédé de changement de rapport dans une boîte de vitesses équipant un véhicule ayant au moins deux roues motrices chacune étant entraînée par une chaîne de traction comportant une machine électrique entraînant un arbre primaire, la machine électrique étant solidaire mécaniquement de l'arbre primaire, une roue étant entraînée par un arbre secondaire, un changement de rapport comportant une phase de dévirage suivie d'une phase de crabotage dans laquelle un manchon lié à un arbre s'engrène dans des crabots récepteurs liés à l'autre arbre, au moins dans la phase de crabotage la machine électrique étant commandée pour induire sur l'arbre primaire un couple produisant une rotation de sens inverse au mouvement de rotation provoqué par le changement de rapport.
Avantageusement, la valeur du couple induite par la machine électrique est, par exemple, asservie sur la position angulaire des crabots récepteurs pour produire un décalage angulaire donné de l'arbre primaire recentrant les crabots récepteurs dans le jeu des pièces mécaniques liées à l'arbre secondaire. Le décalage angulaire donné est, par exemple, sensiblement égal à la moitié de l'angle correspondant au jeu.

La machine électrique étant commandée en courant, la valeur du courant est, par exemple, fonction de l'écart angulaire entre une position de consigne et la position angulaire des crabots récepteurs détectée par au moins un capteur de position.
Le véhicule est par exemple un véhicule hybride.

L'invention a également pour objet une boîte de vitesses équipant un véhicule ayant au moins deux roues motrices, chacune étant entraînée par une chaîne de traction comportant une machine électrique entraînant un arbre primaire, la machine électrique étant solidaire mécaniquement de l'arbre primaire, une roue étant entraînée par un arbre secondaire, un changement de rapport comportant une phase de dévirage suivie d'une phase de crabotage dans laquelle un manchon lié à un arbre s'engrène dans des crabots récepteurs liés à l'autre arbre, la boîte de vitesse comportant une unité commandant au moins dans la phase de crabotage la machine électrique pour induire sur l'arbre primaire un couple produisant une rotation de sens inverse au mouvement de rotation provoqué par le changement de rapport.
Avantageusement, l'unité asservit par exemple la valeur du couple induit par la machine électrique sur la position angulaire des crabots récepteurs pour produire un décalage angulaire donné de l'arbre primaire recentrant les crabots récepteurs et crabot manchon dans le jeu des pièces mécaniques liées à l'arbre secondaire, le décalage angulaire donné étant, par exemple, sensiblement égal à la moitié de l'angle correspondant au jeu.
L'unité commandant la machine électrique en courant, la valeur du courant est, par exemple, fonction de l'écart angulaire entre une position de consigne et la position angulaire des crabots récepteurs détectée par au moins un capteur de position.

L'invention a notamment pour principaux avantages qu'elle permet un temps de crabotage réduit, qu'elle apporte un gain en fiabilité, qu'elle facilite la réalisation d'un actionneur pour le crabotage et qu'elle est économique.

D'autres avantages et caractéristiques de l'invention apparaîtront à l'aide de la description qui suit faite en regard de dessins annexés qui représentent :
- la figure 1, un schéma fonctionnel d'un exemple de chaîne de traction d'un véhicule hybride ;
- la figure 2, une illustration des pièces mises en jeu dans une boîte de vitesses lors d'une phase de crabotage ;
- la figure 3, une illustration schématique des couples appliqués sur les arbres d'une chaîne de transmission en présence lors de la phase de crabotage ;
- les figures 4a et 4b, des illustrations des jeux en présence dans une chaîne de transmission ;
- les figures 5a et 5b, des illustrations de l'effet obtenu par l'application du procédé selon l'invention ramenant les crabots de transmission à l'intérieur du jeu.

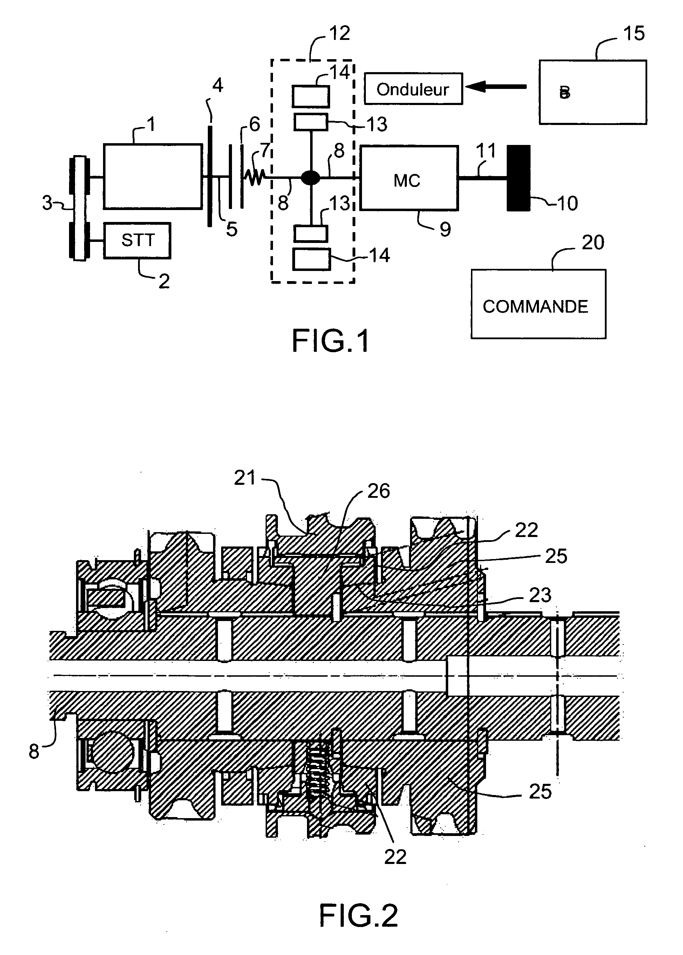

La figure 1 présente un schéma fonctionnel d'un exemple de chaîne de traction d'un véhicule hybride. Elle comporte un moteur thermique 1 couplé par exemple à une machine auxiliaire électrique 2, au moyen d'une courroie 3 entraînée par des poulies 3', 3" solidaires l'une du moteur l'autre de la machine auxiliaire, cette machine auxiliaire permettant le redémarrage du moteur dans un mode dit « stop and go ». Cette dernière ne participe pas directement à la traction du véhicule.
Un volant d'inertie 4 est fixé sur l'arbre de sortie 5 du moteur thermique 1. L'arbre de sortie est de son côté couplé au vilebrequin du moteur. L'arbre de sortie est ensuite relié à l'embrayage 6. Ce dernier effectue un mouvement de glissement 7 dans la direction de l'arbre de sortie 5 pour passer d'une position ouverte à une position fermée ou vice-versa. L'embrayage est par ailleurs relié à l'arbre primaire 8. Cet arbre primaire 8 relie l'arbre de sortie moteur 5 à une boîte mécanique pilotée 9, boîte de vitesses, lorsque l'embrayage est en position fermée. Cette boîte mécanique assure la transmission de la puissance motrice aux roues 10, dont une seule est représentée sur la figure 1. Plus particulièrement la boîte mécanique 9 transmet, après démultiplication, la puissance de sortie aux roues 10 par l'intermédiaire d'un arbre de sortie 11, ou arbre secondaire, couplé à un arbre de transmission non représenté.
Une machine électrique de traction 12 est insérée en série entre l'embrayage 6 et la boîte mécanique pilotée 9. Cette machine électrique de traction 11 comporte un rotor 13 et un stator 14. Le rotor 13 est solidaire de l'arbre primaire 8 et le stator 14, fixe, est par exemple solidaire du carter du moteur. Une batterie 15 ou un ensemble de batteries, de forte puissance, alimente en énergie électrique la machine de traction 12 via un onduleur 16. Ce dernier permet de transformer la tension continue en sortie de batterie en tension alternative apte à entraîner le rotor 13 en rotation.
Une unité de commande 20 associée à des capteurs, non représentés, pilote la chaîne de traction associée à la roue 10. L'unité de commande pilote notamment la machine électrique 12. Les capteurs permettent notamment de mesurer les différentes vitesses de rotation en jeu dans la chaîne de traction. Avec une telle architecture de chaîne de traction, le véhicule peut notamment fonctionner selon les modes suivants :
- le véhicule roule en mode thermique pur lorsque l'embrayage 6 est fermé et que la machine électrique de traction 12 n'est pas alimentée ou commandée, le moteur thermique 1 assurant seul la traction ;
- le véhicule roule en mode électrique pur lorsque l'embrayage 6 est ouvert et que la machine électrique 12 est alimentée ou commandée pour assurer seule la traction du véhicule ;
- le véhicule roule en mode mixte lorsque le moteur thermique 1 assure la traction du véhicule assisté par la machine électrique 12, l'embrayage 6 étant fermé.
La machine électrique 12 fixée sur l'arbre primaire 8 de la boîte de vitesses 9 impose une contrainte importante. En effet, la contrainte de la machine électrique est son inertie importante. Cette inertie supplémentaire équivaut, par exemple, à rajouter une douzaine d'embrayages. De ce fait, pour engrener les pignons lors d'une phase de crabotage notamment, il est nécessaire de fournir des efforts très importants par rapport à une architecture classique. Ce surcroît d'effort peut conduire à pertes de performance, notamment à des impossibilités de changements de rapport ou à des temps de passage trop longs d'un rapport à l'autre.
L'invention permet d'optimiser le changement de rapport, en réduisant les pertes de performance précitées, malgré l'inertie importante de la machine électrique 12.

La figure 2 illustre les pièces mises en jeu dans la boîte de vitesses 9 lors d'une phase de crabotage. La phase de crabotage fait suite à une phase de vol libre et à une phase de dévirage de synchronisation. Le dévirage est la phase au cours de laquelle une bague de synchronisation se déverrouille après synchronisation des vitesses de part et d'autre.
Un manchon 21 coopère avec la bague de synchronisation 22 ayant une terminaison conique, cette bague étant encore appelée bague de dévirage. Le manchon 21 est fixé sur un moyeu 26 lié à l'arbre secondaire 11 dans le cas où la bague de synchronisation 22 est liée à l'arbre secondaire. Il est lié à l'arbre primaire 8 dans le cas contraire. Le mouvement du manchon est produit par un actionneur situé dans la boîte de vitesses, non représenté. Sous l'action de ce dernier le manchon crée une poussée axiale Fₐₓᵢₐₗ.
La bague de synchronisation possède une surface de contact 23 sur sa partie inférieure qui permet de transmettre un couple entre la bague et le pignon fou 25 lors de l'application de l'effort produit par le manchon sur ses dents, non représentées. Ce pignon fou 25 est relié à l'arbre primaire 8 lorsque le manchon est relié à l'arbre secondaire, il est relié à l'arbre secondaire dans le cas contraire. La bague de synchronisation joue un rôle de tampon dans la mesure où elle permet au manchon 21 d'appliquer un couple lié à l'effort de régime moteur, c'est-à-dire au différentiel de vitesse entre les parties primaire et secondaire. En effet, lors d'un changement de rapport il est prévu de réajuster la vitesse de rotation du moteur de traction 1, 12, entraînant l'arbre primaire 8 à un niveau compatible de la vitesse de la roue 10, entraînée par l'arbre secondaire, lorsque la chaîne de traction utilisera le rapport que l'on envisage de sélectionner. C'est l'opération de synchronisation. Lors de cette synchronisation la différence de régime entre l'arbre primaire, relié au pignon fou 25, et l'arbre secondaire, relié au manchon 21, crée un couple qui s'oppose à l'avancée du manchon, ce couple sera appelé par la suite couple de synchronisation. L'effort Fₐₓᵢₐₗ. produit par le manchon, encore appelé effort menant, crée un couple qui tend à faire tourner la bague de synchronisation 22 pour libérer le passage du manchon. Ce couple, qui sera appelé par la suite couple de dévirage, est lié à la géométrie des dents du manchon et de la bague.
La phase de vol libre correspond au déplacement du manchon sans effort résistant avant que celui-ci ne rencontre les crabots du pignon fou 25.
L'arbre fou est relié à l'arbre primaire 8. Lors d'un changement de rapport il est prévu de réajuster la vitesse de rotation du moteur de traction 1, 12, entraînant l'arbre primaire 8 à un niveau compatible de la vitesse de la roue 10, entraînée par l'arbre secondaire, lorsque la chaîne de traction utilisera le rapport que l'on envisage de sélectionner.
La phase de crabotage correspond à la solidarisation du manchon 21 et du pignon fou 25 pour relier l'arbre primaire 8 à la roue 10 du véhicule avant réembrayage ou passage de couple par la machine électrique 12.

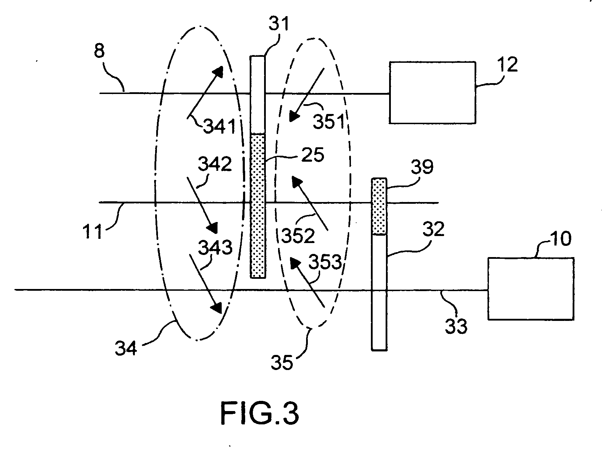

La figure 3 illustre de façon schématique les couples appliqués sur les arbres 8, 11, 31 en présence lors de la phase de crabotage. L'arbre primaire 8 supportant la machine électrique 12 est couplé à l'arbre secondaire 11 par un couple de pignon 31, 25 que l'on appellera encore pignon secondaire. Les crabots du manchon 21 sont liés au pignon 25.
L'arbre secondaire est, par exemple, couplé à un arbre de transmission 33 relié à la roue 10 par une deuxième couronne de pont 32 s'engrenant dans un deuxième pignon 39.
Un premier regroupement 34 de flèches 341, 342, 343 illustre les effets des couples exercés sur les arbres pour un passage descendant, lors d'un changement de rapport. Une flèche montante 341 liée à l'arbre primaire 8 illustre le fait que la vitesse de rotation de ce dernier tende à augmenter sous l'action du couple qu'il subit. Des flèches descendantes 342, 343 liées aux arbres secondaires 11 et de transmission 33 montrent que leurs vitesses de rotation diminuent, ce qui tend à décélérer le véhicule.
Un deuxième regroupement 35 de flèches 351, 352, 353 illustrent les effets des couples exercés sur les arbres pour un passage montant, lors d'un changement de rapport. Une flèche descendante 351 liée à l'arbre primaire 8 illustre le fait que la vitesse de rotation de ce dernier tende à diminuer sous l'action du couple qu'il subit. Des flèches montantes 352, 353 liées aux arbres secondaires 11 et de transmission 33 montrent que leurs vitesses de rotation augmentent, ce qui tend à accélérer le véhicule.
Dans la phase de crabotage, le couple résistant d'une boîte de vitesses classique est très dépendant des jeux qui sont situés en aval de la bague de synchronisation 22, c'est-à-dire par exemple entre le manchon 21 et la roue du véhicule 10, si le manchon est lié à l'arbre secondaire. Dans le cas où tous les jeux entre les pièces mécaniques situées en aval de la bague de synchronisation sont rattrapés, il s'agit de faire tourner l'inertie la plus faible, c'est-à-dire celle de toutes les pièces qui sont liées à l'arbre primaire. En effet, dans ce cas, on ne peut faire tourner que l'inertie du primaire puisque l'inertie du secondaire est exagérément importante car il s'agit de l'inertie du véhicule.

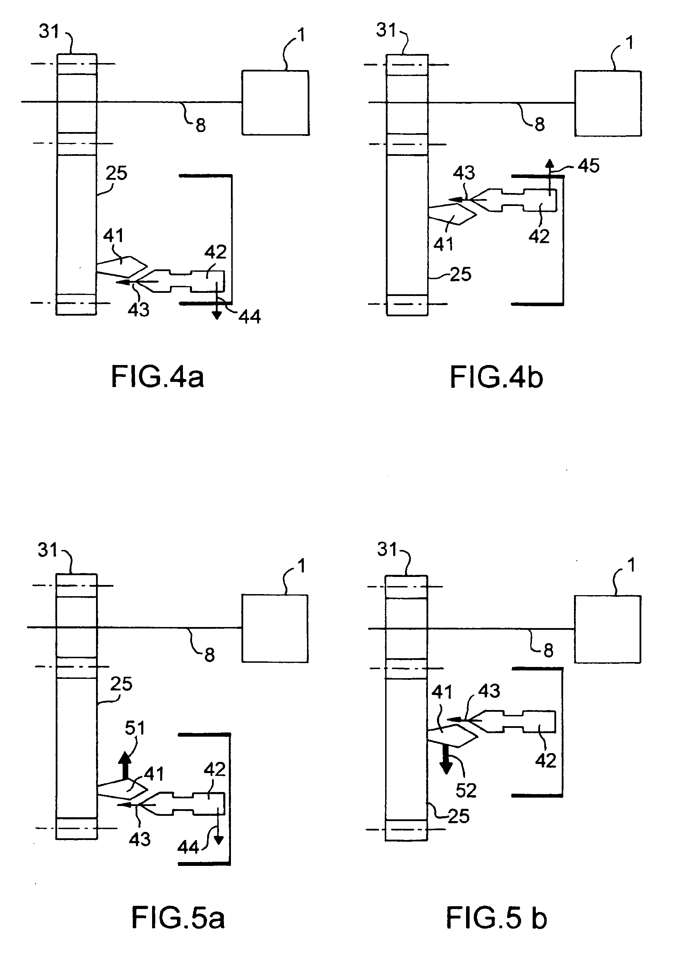

Les figures 4a et 4b illustrent le jeu en aval du manchon 21. Plus particulièrement ce jeu est la somme des jeux entre le crabot du manchon 21 et le moyeu de la roue 10. Il comporte notamment :
- le jeu entre le moyeu de la roue 10 et l'arbre de transmission 33 ;
- le jeu entre l'arbre de transmission et le système différentiel composé des couronnes de pont 31, 32 s'engrenant dans les pignons 30, 32 couplés aux arbres ;
- les jeux internes à ce système différentiel ;
- le jeu entre la couronne de pont 31 et le pignon secondaire 25 ;
- le jeu entre le moyeu 26 et l'arbre primaire 8 par exemple ;
- et le jeu entre le manchon 21 et ce moyeu 26.
Le jeu 40 illustré par les figures 4a et 4b représente donc l'ensemble de ces jeux additionnés. La valeur du jeu 40 peut être de l'ordre de 10° à 15° par exemple au manchon.
Plus particulièrement, la figure 4a illustre un crabot 42 du manchon 21 s'engrenant dans un crabot 41 récepteur, du pignon fou 25, sous la poussée de l'effort 43 correspondant à l'effort Fₐₓᵢₐₗ, produit par l'actionneur sur le manchon. La figure 4a correspond au cas d'un passage montant, c'est-à-dire à une accélération 44 du secondaire, donc du véhicule, illustrée par le groupement 35 de la figure 3. La figure 4a montre que le crabot 42 du secondaire, entraîné par l'accélération 44, est en bout de jeu, c'est-à-dire que le crabotage se fait alors avec une contrainte très importante. En effet l'effort 43 transmis par le manchon 21 pour engrener les crabots 41, 42 doit vaincre l'inertie importante de la partie primaire ou secondaire de la chaîne de transmission, qui correspond en fait à l'inertie du véhicule et non pas notamment à l'inertie secondaire dans le jeu aval entre le manchon 21 et la roue 10.
La figure 4b correspond au cas d'un passage descendant, c'est-à-dire à une décélération 45 du secondaire, illustrée par le groupement 34 de la figure 3. La figure 4b montre que le crabot 42 du secondaire, entraîné par la décélération 45, est encore en bout de jeu mais cette fois dans l'autre sens. Néanmoins, le crabotage se fait toujours avec une contrainte très importante. En effet, l'effort 43 transmis par le manchon 21 pour engrener les crabots 41, 42 doit encore vaincre l'inertie importante de la partie secondaire de la chaîne de transmission ou primaire, dont l'inertie de la machine électrique élevée au carré du rapport de démultiplication.
Dans un véhicule classique, l'effort à générer est donc déjà important du fait que les crabots récepteurs 42 sont plaqués en bout de jeu sous contrainte comme l'illustrent les figures 4a et 4b. Cependant, pour un véhicule équipé d'un moteur de traction électrique 12 au primaire, l'effort à fournir par l'actionneur est encore plus important.

Les figures 5a et 5b illustrent un crabotage effectué par un procédé selon l'invention. L'invention utilise avantageusement la machine électrique 12 fixée sur l'arbre primaire pour recentrer les crabots récepteurs 41 et crabots manchon 42 dans le jeu 40 et donc faciliter le crabotage, c'est-à-dire l'engagement du rapport. Cela permet de libérer ces crabots récepteurs de l'inertie des contraintes liées aux inerties des parties secondaires. Selon l'invention, la machine électrique 12 est commandée pour fournir un couple qui s'oppose au mouvement de décélération ou d'accélération. Ce couple est fourni au moins pendant la phase de crabotage. Par ce couple, la machine électrique induit un effort 51 qui provoque un écart de rotation recentrant les crabots récepteurs 42 dans le jeu 40. Par ce couple, la machine électrique relance donc l'arbre dans le sens inverse de son mouvement naturel induit par l'accélération ou la décélération, évitant ainsi aux crabots 42 de rattraper les extrémités du jeu 40. Dans ce cas la transmission est libre, c'est-à-dire hors contrainte. L'effort 43 pour faire tourner les pièces est alors nettement diminué. En fait, l'invention permet de faire tourner l'inertie la plus faible qui est celle correspondant aux pièces qui sont liées à l'arbre secondaire dans le jeu 40. Dans ce cas, l'inertie au secondaire est plus faible que l'inertie au primaire augmentée par celle de la machine électrique 12. L'invention utilise donc avantageusement la machine électrique liée à l'arbre primaire en la pilotant de façon à ce que les crabots récepteurs 41 et crabots manchon 42 soient recentrés dans le jeu 40, ce qui permet de s'affranchir de l'inertie importante propre à la machine électrique puisque l'on fait tourner alors l'inertie liée à l'arbre secondaire dans son jeu 40.
La figure 5a correspond à un changement de rapport montant. L'accélération provoque un mouvement 44 de rotation vers une extrémité 58 du jeu. Le couple induit par la machine électrique sur l'arbre primaire provoque un mouvement 51 en sens inverse qui tend à recentrer les crabots 42 et 41 dans le jeu 40.
La figure 5b correspond à un changement de rapport descendant. L'accélération provoque un mouvement 45 de rotation vers l'autre extrémité 59 du jeu. Le couple induit par la machine électrique sur l'arbre primaire provoque un mouvement 52 en sens inverse qui tend à recentrer les crabots 42.
Le pilotage de la machine électrique peut être tel, par exemple, qu'il provoque un décalage angulaire déterminé dans un sens ou dans l'autre, selon que le changement de rapport est montant ou descendant, d'environ la moitié de l'angle correspondant au jeu 40. Ce décalage peut être effectué par une régulation en position dans le jeu si le véhicule dispose d'un système suffisamment précis avec des capteurs adaptés permettant de détecter la position des crabots.
Dans tous les cas pour provoquer un mouvement de recentrage, le couple induit par la machine électrique doit vaincre le couple dû à l'inertie des pièces secondaires ainsi qu'à la traînée de la boîte de vitesses. En effet, le couple de traînée de la boîte influe aussi sur l'effort à produire, ce couple de traînée est notamment dû au frottement des pièces mécaniques dans l'huile à l'intérieur de la boîte de vitesses et aux différents roulements en jeu. Le couple produit par la machine électrique est commandée par un courant ou une tension électrique fournie par l'unité de commande 20. A cet effet, l'unité de commande comporte, par exemple, un circuit électronique couplé à des interfaces adaptées pour transmettre la puissance électrique nécessaire à la machine électrique.
Dans le cas d'asservissement du couple sur la position angulaire des crabots, des capteurs envoient l'information de position angulaire des crabots à l'unité de commande 20 qui compare cette information à une valeur de consigne, la commande en courant ou en tension de la machine électrique étant fonction de l'écart avec la consigne.
Le type de boîte de vitesses permet de connaître les inerties des pièces en rotation, notamment les pièces au secondaire. Le couple de traînée peut être calculé à partir de la mesure de régime de l'arbre primaire, cette mesure se déduit classiquement de la mesure de la chute de régime de l'arbre primaire définie par la différence entre le régime moteur et le régime cible théorique à atteindre, la différence définissant la traînée.

L'invention a notamment comme avantage qu'elle permet un temps de crabotage réduit. Un autre avantage est un gain en fiabilité car l'effort résistant vu par l'actionneur et par les crabots est réduit. L'invention facilite aussi la réalisation d'un actionneur pour le crabotage à froid ou en passage très rapide, cas où les efforts de crabotage sont maximums. Enfin, l'invention est économique car elle tire avantage de l'architecture existante de la chaîne de transmission sans ajout de composants particuliers.
L'invention a été décrite pour un véhicule hybride mais elle peut s'appliquer pour un véhicule à traction entièrement électrique.

## Revendications

1. Procédé de changement de rapport dans une boîte de vitesses (9) équipant un véhicule ayant au moins deux roues motrices (10) chacune étant entraînée par une chaîne de traction (8, 12, 9, 11) comportant une machine électrique (12) entraînant un arbre primaire (8), la machine électrique (12) étant solidaire mécaniquement de l'arbre primaire (8), une roue (10) étant entraînée par un arbre secondaire (11), un changement de rapport comportant une phase de dévirage suivie d'une phase de crabotage dans laquelle un manchon (21) lié à un arbre (8, 11) s'engrène dans des crabots récepteurs (41) liés à l'autre arbre (8, 11) où moins dans la phase de crabotage la machine électrique (12) est commandée pour induire sur l'arbre primaire un couple produisant une rotation de sens inverse au mouvement de rotation provoqué par le changement de rapport, **caractérisé en ce que** la valeur du couple induite par la machine électrique (12) est asservie sur la position angulaire des crabots récepteurs (41) pour produire un décalage angulaire donné de l'arbre primaire (8) recentrant les crabots récepteurs (41) dans le jeu (40) des pièces mécaniques liées à l'arbre secondaire.

2. Procédé selon la revendication 1, **caractérisé en ce que** le décalage angulaire donné est sensiblement égal à la moitié de l'angle correspondant au jeu (40).

3. Procédé selon l'une quelconque des revendications précédentes, **caractérisé en ce que** la machine électrique (12) étant commandée en courant, la valeur du courant est fonction de l'écart angulaire entre une position de consigne et la position angulaire des crabots récepteurs (41) détectée par au moins un capteur de position.

4. Procédé selon l'une quelconque des revendications précédentes, **caractérisé en ce que** le véhicule est un véhicule hybride.

5. Boîte de vitesses équipant un véhicule ayant au moins deux roues motrices (10) chacune étant entraînée par une chaîne de traction (8, 12, 9, 11) comportant une machine électrique (12) entraînant un arbre primaire (8), la machine électrique (12) étant solidaire mécaniquement de l'arbre primaire (8), une roue (10) étant entraînée par un arbre secondaire (11), un changement de rapport comportant une phase de dévirage suivie d'une phase de crabotage dans laquelle un manchon (21) lié à un arbre (8, 11) s'engrène dans des crabots récepteurs (41) lié à l'autre arbre (8, 11), et comportant une unité (20) commandant au moins dans la phase de crabotage la machine électrique (12) pour induire sur l'arbre primaire un couple produisant une rotation de sens inverse au mouvement de rotation provoqué par le changement de rapport, **caractérisé en ce que** l'unité (20) asservit la valeur du couple induit par la machine électrique (12) sur la position angulaire des crabots récepteurs (41) pour produire un décalage angulaire donné de l'arbre primaire (8) recentrant les crabots récepteurs (41) et crabot manchon (42) dans le jeu (40) des pièces mécaniques liées à l'arbre secondaire.

6. Boîte de vitesses selon la revendication 5, **caractérisé en ce que** le décalage angulaire donné est sensiblement égal à la moitié de l'angle correspondant au jeu (40).

7. Boîte de vitesses selon l'une quelconque des revendications 5 ou 6, **caractérisé en ce que** l'unité (20) commandant la machine électrique (12) en courant, la valeur du courant est fonction de l'écart angulaire entre une position de consigne et la position angulaire des crabots récepteurs (41) détectée par au moins un capteur de position.

## Claims

1. Method for changing the gear ratio in a gearbox (9) mounted in a vehicle having at least two driving wheels (10) each driven by a traction chain (8, 12, 9, 11) that comprises an electric machine (12) driving a primary shaft (8), the electric machine (12) being mechanically connected to the primary shaft (8), a wheel (10) being driven by a secondary shaft (11), a gear ratio change including a counter-rotation phase followed by a clutch phase in which a sleeve (21) connected to a shaft (8, 11) engages in receiving dogs (41) connected to the other shaft (8, 11), the electric machine (12) being controlled at least in the clutch phase so as to generate a torque on the primary shaft that produces a rotation in the opposite direction from the rotational movement caused by the gear ratio change, **characterised in that** the value of the torque generated by the electric machine (12) is dependent on the angular position of the receiving dogs (41) so as to produce a given angular offset of the primary shaft (8) that recentres the receiving dogs (41) in the clearance (40) of the mechanical parts connected to the secondary shaft.

2. Method according to claim 1, **characterised in that** the given angular offset is substantially equal to half of the angle corresponding to the clearance (40).

3. Method according to any one of the preceding claims, **characterised in that** the current to the electric machine (12) is controlled in such a way that the value of the current is a function of the angular deviation between a set position and the angular position of the receiving dogs (41) detected by at least one position sensor.

4. Method according to any one of the preceding claims, **characterised in that** the vehicle is a hybrid vehicle.

5. Gearbox mounted in a vehicle having at least two driving wheels (10) each driven by a traction chain (8, 12, 9, 11) that comprises an electric machine (12) driving a primary shaft (8), the electric machine (12) being mechanically connected to the primary shaft (8), a wheel (10) being driven by a secondary shaft (11), a gear ratio change including a counter-rotation phase followed by a clutch phase in which a sleeve (21) connected to a shaft (8, 11) engages in receiving dogs (41) connected to the other shaft (8, 11), and comprising a unit (20) controlling the electric machine (12) at least in the clutch phase so as to generate a torque on the primary shaft that produces a rotation in the opposite direction from the rotational movement caused by the gear ratio change, **characterised in that** the unit (20) makes the value of the torque generated by the electric machine (12) dependent on the angular position of the receiving dogs (41) so as to produce a given angular offset of the primary shaft (8) that recentres the receiving dogs (41) and sleeve dog clutch (42) in the clearance (40) of the mechanical parts connected to the secondary shaft.

6. Gearbox according to claim 5, **characterised in that** the given angular offset is substantially equal to half of the angle corresponding to the clearance (40).

7. Gearbox according to either claim 5 or claim 6, **characterised in that** the unit (20) controls the current to the electric machine (12) in such a way that the value of the current is a function of the angular deviation between a set position and the angular position of the receiving dogs (41) detected by at least one position sensor.

## Patentansprüche

1. Verfahren für den Gangwechsel in einem Getriebe (9), mit dem ein Fahrzeug ausgestattet ist, das mindestens zwei Antriebsräder (10) aufweist, von denen jedes von einem Antriebsstrang (8, 12, 9, 11) angetrieben wird, der eine elektrische Maschine enthält (12), die eine Primärwelle (8) antreibt, wobei die elektrische Maschine (12) mechanisch fest mit der Primärwelle (8) verbunden ist, und ein Rad (10) von einer Sekundärwelle (11) angetrieben wird, wobei ein Gangwechsel eine Gegendrehphase gefolgt von einer Klauenkuppelphase umfasst, in der eine mit einer Welle (8, 11) verbundene Muffe (21) in die mit der anderen Welle (8, 11) verbundenen Aufnahmeklauen (41) eingreift, wobei die elektrische Maschine (12) zumindest in der Klauenkuppelphase angesteuert wird, um auf der Primärwelle ein Drehmoment zu erzeugen, das eine Drehbewegung verursacht, die umgekehrt zu jener Drehbewegung verläuft, die durch den Gangwechselhervorgerufen wird, **dadurch gekennzeichnet, dass** der Wert des von der elektrischen Maschine (12) erzeugten Drehmoments in Abhängigkeit von der Winkelposition der Aufnahmeklauen (41) geregelt wird, um eine gegebene Winkelverschiebung der Primärwelle (8) hervorzurufen, sodass die Aufnahmeklauen (41) wieder mittig in das Spiel (40) der mechanischen, mit der Sekundärwelle verbundenen Teile gebracht werden.

2. Verfahren nach Anspruch 1, **dadurch gekennzeichnet, dass** die gegebene Winkelverschiebung in etwa gleich dem halben Winkel ist, der dem Spiel (40) entspricht.

3. Verfahren nach irgendeinem der vorangehenden Ansprüche, **dadurch gekennzeichnet, dass** der Stromwert der in Regelung stehenden elektrischen Maschine (12) von der Winkelabweichung zwischen einer Sollwertposition und der Winkelposition der Aufnahmeklauen (41) abhängig ist, die von mindestens einem Positionssensor erfasst wird.

4. Verfahren nach irgendeinem der vorangehenden Ansprüche, **dadurch gekennzeichnet, dass** das Fahrzeug ein Hybridfahrzeug ist.

5. Getriebe, das in ein Fahrzeug mit zumindest zwei Antriebsrädern (10)verbaut ist, von denen jedes von einem Antriebsstrang (8, 12, 9, 11) angetrieben wird, der eine elektrische Maschine (12) enthält, die eine Primärwelle (8) antreibt, wobei die elektrische Maschine (12) mechanisch fest mit der Primärwelle (8) verbunden ist, und ein Rad (10) von einer Sekundärwelle (11) angetrieben wird, wobei ein Gangwechsel eine Gegendrehphase gefolgt von einer Klauenkuppelphase umfasst, in der eine mit einer Welle (8, 11) verbundene Muffe (21) in die mit der anderen Welle (8, 11) verbundenen Aufnahmeklauen (41) eingreift, und mit einer Einheit (20), die die elektrische Maschine (12)zumindest in der Klauenkuppelphase ansteuert, um auf der Primärwelle ein Drehmoment zu erzeugen, das eine Drehbewegung verursacht, die umgekehrt zu jener Drehbewegung verläuft, die durch den Gangwechsel hervorgerufen wird, **dadurch gekennzeichnet, dass** die Einheit (20) den Wert des Drehmoments regelt, das von der elektrischen Maschine (12) auf die Winkelposition der Aufnahmeteilklauen (41) induziert wird, um eine gegebene Winkelverschiebung der Primärwelle (8) hervorzurufen, sodass die Aufnahmeklauen (41) und die Muffenkuppelklaue (42) wieder mittig in das Spiel (40) der mechanischen, mit der Sekundärwelle verbundenen Teile gebracht werden.

6. Getriebe nach Anspruch 5, **dadurch gekennzeichnet, dass** die gegebene Winkelverschiebung in etwa gleich dem halben Winkel ist, der dem Spiel (40) entspricht.

7. Getriebe nach irgendeinem der Ansprüche 5 oder 6, **dadurch gekennzeichnet, dass** der Stromwert bei der Stromansteuerung der elektrischen Maschine (12) durch die Einheit (20) von der Winkelabweichung zwischen einer Sollwertposition und der Winkelposition der Aufnahmeklauen (41) abhängig ist, die von mindestens einem Positionssensor erfasst wird.
